# FASCICULE DE BREVET EUROPEEN

(11) **EP 0 964 594 B1**
(45) Date de publication et mention de la délivrance du brevet: **20.02.2008**
(21) Numéro de dépôt: 99401271.4
(22) Date de dépôt: 27.05.1999
(51) Int. Cl.: H04Q 7/32, H04M 1/72

(54) **Appareil de radiocommunication programmé pour une saisie automatique de données d'un répertoire**
Programmiertes Funkgerät zur automatischen Erfassung von Verzeichnisdaten
Radiocommunication device, programmed for automatic capture of directory data

(30) Priorité: 08.06.1998 FR 9807164
(43) Date de publication de la demande: 15.12.1999
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Guerlin, Jean-Pierre, 95130 le Plessis Bouchard (FR)
(74) Mandataire: Feray, Valérie

(56) Documents cités:
- EP-A- 0 378 775
- WO-A-97/04580
- US-A- 5 687 216
- US-A- 5 737 394

## Description

L'invention concerne les appareils de radiocommunication et en particulier les téléphones cellulaires mobiles.

Parmi les services disponibles sur réseau au standard GSM, il existe un service dit SMS ('Short Message Service') qui permet d'envoyer vers un téléphone mobile, un message court constitué d'une succession de caractères alphanumériques, typiquement une succession de 160 caractères alphanumériques. Ces messages courts sont généralement stockés temporairement dans un serveur en attendant que le destinataire soit à même de les recevoir. Dès que le téléphone mobile destinataire de ce ou ces messages courts se manifeste, par exemple lorsqu'il se connecte au réseau GSM lors de sa mise sous tension, le réseau avertit le serveur de messages courts qui peut ainsi délivrer le ou les messages à son destinataire. Les opérateurs utilisent ces messages courts comme support pour les services qu'ils développent. C'est le cas en particulier du service d'annuaire, qui permet d'obtenir les coordonnées téléphoniques d'un abonné. Le libellé du message court peut contenir par exemple le nom de l'abonné, son adresse et son numéro d'appel.

Les appareils de radiocommunication du type téléphones mobiles comprennent généralement un écran d'affichage, un clavier avec des touches, une mémoire prévue pour enregistrer temporairement un ou plusieurs messages SMS reçus par radiocommunication et un processeur programmé pour fonctionner avec les touches, la mémoire et l'écran d'affichage afin d'afficher à l'écran, en réponse à au moins un appui touche, le ou les messages SMS enregistrés en mémoire.

Un tel appareil est connu par exemple du document US-A5 737 394.

Certains téléphones mobiles sont aussi conçus pour offrir la possibilité d'une saisie de données à enregistrer sous une forme structurée dans la mémoire. Il peut s'agir en particulier de données d'un répertoire téléphonique et/ou d'adresses. Certains appareils offrent encore la possibilité de gérer plusieurs répertoires.

Jusqu'à présent, la saisie des données d'un tel répertoire requiert l'utilisation des touches alphanumériques du clavier du téléphone pour saisir chaque caractère. Or il est bien connu que chaque touche d'un clavier de téléphone mobile est programmée pour désigner au moins trois caractères alphabétiques et un chiffre. Il en résulte que la saisie d'un seul caractère peut nécessiter une séquence d'appuis sur la même touche pour obtenir le caractère désiré. Par ailleurs, la saisie d'un enregistrement complet du répertoire (une fiche de répertoire) requiert de déplacer un curseur sur l'écran d'affichage afin de positionner celui-ci sur chaque début de champ de l'enregistrement. La répétition des appuis touches rend donc la saisie des données fastidieuse et le but de l'invention est rendre plus simple la procédure de saisie de données pour constituer une structure ordonnée enregistrée dans la mémoire d'un appareil de radio communication quand ces données sont déjà disponibles dans cette mémoire, par exemple à l'intérieur d'un message court SMS.

L'idée à la base de l'invention est donc de profiter de la présence d'un message court en mémoire de l'appareil de radiocommunication, notamment un message contenant le nom, l'adresse et le numéro d'appel d'un abonné, pour créer et/ou mettre à jour un répertoire téléphonique et d'adresses sans qu'il soit nécessaire de saisir chaque caractère du nom, de l'adresse et du numéro d'appel de cet abonné.

Plus particulièrement, l'invention a pour objet un appareil de radio communication comprenant un écran d'affichage, un clavier avec des touches, une première mémoire prévue pour enregistrer temporairement un succession de caractères reçus par radio communication et un processeur programmé pour fonctionner avec les touches du clavier, la première mémoire et l'écran d'affichage afin d'afficher à l'écran ladite succession de caractères reçue par radio communication, caractérisé en ce le processeur est en outre programmé pour passer, par au moins un appui touche, d'un affichage écran de la succession de caractères enregistrée dans la première mémoire vers un affichage écran de saisie de données sous forme structurée à enregistrer dans une seconde mémoire avec une présentation, dans cet écran de saisie de données, de ladite succession de caractères enregistrée dans la première mémoire afin de traiter au moins une partie de cette succession de caractères comme données à enregistrer sous forme structurée dans la seconde mémoire.

Une pratique syntaxique courante dans les messages courts SMS consiste à encadrer un numéro d'appel par un symbole de séparation de chaînes de caractères, en particulier le symbole " reconnu de façon standard par le processeur, pour permettre le déclenchement automatique d'un appel sur les numéros encadrés par ce symbole de séparation. Selon un mode de réalisation particulier de l'appareil de radiocommunication selon l'invention, les touches du clavier incluent une touche contextuelle dont l'appui déplace un curseur au début d'une chaîne de caractères identifiée par un symbole de séparation et une autre touche contextuelle dont l'appui provoque la saisie de cette chaîne de caractères comme données à enregistrer sous forme structurée dans la mémoire. De la sorte, il n'est plus utile de déplacer le curseur pour identifier la chaîne de caractères à saisir ce qui simplifie encore la procédure de saisie. Si le message court SMS est déjà structuré à l'image de la structure d'une fiche de répertoire, c'est à dire si il est composé d'une succession de chaînes de caractères encadrée chacune par un symbole de séparation de chaînes de caractères et que ces chaînes sont ordonnées suivant les enregistrements d'une fiche de répertoire, la saisie complète de la fiche de répertoire pourrait se faire par un seul appui touche ou encore par un traitement automatique. En variante de cette dernière forme de mise en oeuvre, le symbole de séparation de chaînes de caractères pourrait être remplacé par un identificateur de champ d'enregistrement.

Il est entendu que l'invention ne se limite pas à la saisie de données pour constituer un répertoire téléphonique et/ou d'adresses d'abonnés. Elle s'étend à d'autre type de structure ordonnée de données, par exemple à un agenda.

La description qui suit permettra de mieux comprendre encore l'invention illustrée sur les dessins.

La figure 1 montre de façon très schématique un appareil de radiocommunication avec un clavier avec des touches et un écran d'affichage.

La figure 2 est une illustration d'un affichage écran d'un message court SMS reçu par l'appareil de radiocommunication.

La figure 3 est une illustration d'un affichage écran d'un répertoire téléphonique et d'adresses.

La figure 4 est une illustration d'un affichage écran de saisie de données d'une fiche de répertoire avec une présentation dans cet écran de saisie d'un message court SMS.

La figure 5 est une illustration d'un affichage écran de validation de saisie de données pour constituer un répertoire.

La figure 6 est une autre illustration d'un affichage écran de saisie de données d'une fiche de répertoire avec une présentation dans cet écran de saisie d'un message court SMS.

La figure 7 est une autre illustration d'un écran de validation de saisie de données pour constituer le répertoire.

La figure 8 est une illustration d'un affichage écran du répertoire après la saisie de données.

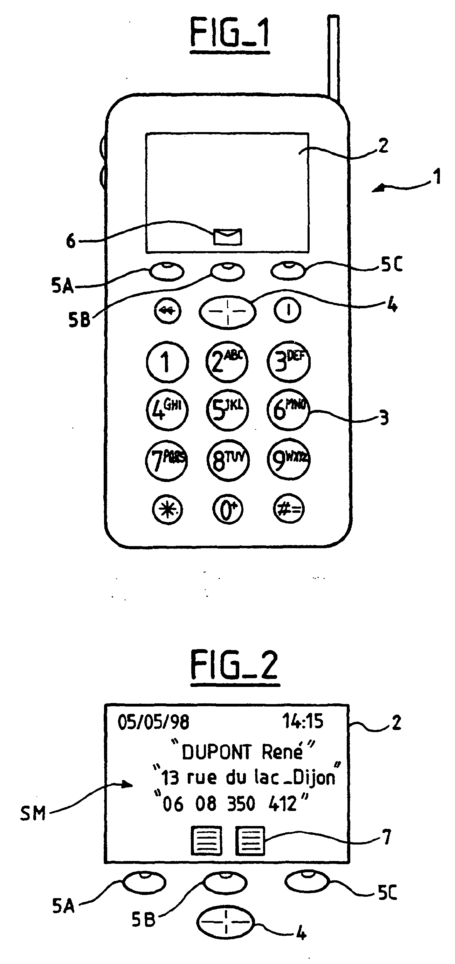

Figure 1, un appareil de radiocommunication comme un téléphone mobile cellulaire 1, comporte un écran d'affichage 2 à plusieurs lignes et colonnes de caractères et un clavier avec des touches numériques et alphabétiques 3. Le téléphone mobile de la figure 1 inclut aussi une touche de navigation 4 du curseur à l'écran et des touches contextuelles, ici trois touches contextuelles 5A, 5B et 5C, qui sont directement placées sur le bord inférieur de l'écran.

Cet appareil comprend bien entendu un processeur (non représenté) programmé pour fonctionner avec l'écran d'affichage, les touches du clavier et une mémoire non représentés, cette mémoire pouvant être un boîtier mémoire attaché au boîtier de l'appareil ou à une carte mémoire destinée à être insérée dans l'appareil. L'appareil comprend encore des moyens pour recevoir et émettre des messages courts SMS par radio communication.

A cet égard le processeur est programmé pour permettre, par au moins un appui touche, l'affichage du ou des messages courts SMS reçus par l'appareil. Dans l'exemple montré sur la figure 1, la touche contextuelle 5B est en relation avec un pictogramme 6 affiché à l'écran qui désigne une boîte à lettres. C'est cette touche contextuelle qui déclenche l'affichage écran du ou des messages courts SMS reçus par l'appareil.

Figure 2, un exemple de message court SMS est montré affiché à l'écran 2. Sur cette figure on voit que le message court SMS indiqué par SM est structuré en trois chaînes de caractères alphanumériques encadrées chacune par un symbole de séparation de chaînes de caractères, ici le symbole ". On verra par la suite comment cette syntaxe du message court SMS peut être exploitée pour une saisie automatique de données à enregistrer sous une forme structurée dans la mémoire.

Selon l'invention, le processeur est programmé pour afficher dans l'écran d'affichage d'un message court un pictogramme 7 en relation avec une touche contextuelle, ici la touche 5B, dont l'appui permet de passer à une procédure de saisie de données et en particulier à une procédure de saisie de données d'un répertoire téléphonique et/ou d'adresses.

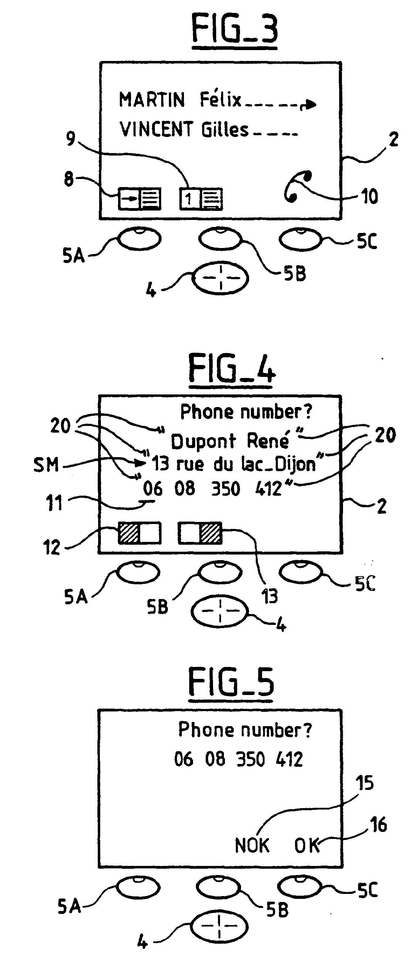

La figure 3 montre un premier écran de la procédure de traitemment de données pour la constitution d'un répertoire. Sur cette écran de saisie, la touche contextuelle 5A en relation avec le pictogramme 8 est programmée pour que son appui provoque le passage à un écran de saisie d'une fiche du répertoire courant alors que la touche contextuelle 5B en relation avec le pictogramme 9 est programmée pour que son appui provoque le changement du répertoire courant. Enfin la touche contextuelle 5C en relation avec le pictogramme 10 est programmée pour que son appui provoque un envoi d'appel à partir des informations contenues dans l'enregistrement courant du répertoire courant identifié par le symbole ►. Le changement d'enregistrement courant dans le répertoire courant s'effectue à l'aide de la touche de navigation 4 ainsi que le défilement des caractères de cet enregistrement courant.

En réponse à l'appui de la touche contextuelle 5A dans l'écran de la figure 3, le processeur est programmé pour passer à un écran de saisie d'un nouvel enregistrement du répertoire courant illustré sur la figure 4.

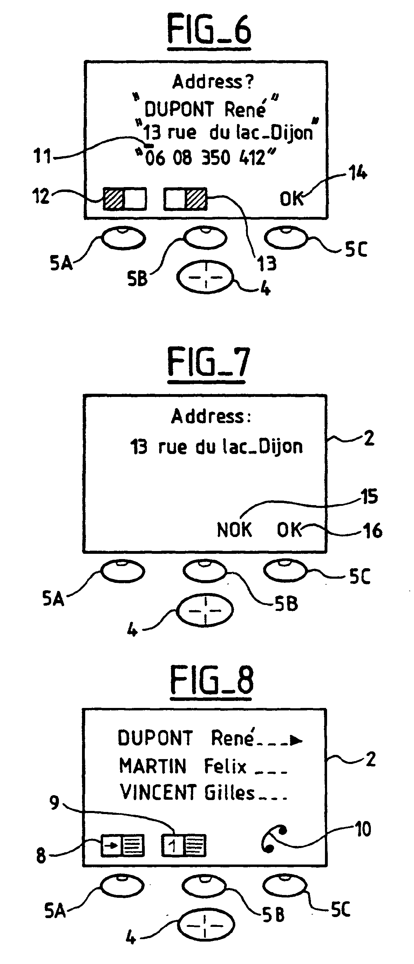

Figure 4, Selon l'invention, le processeur est programmé pour présenter dans ce premier écran de saisie d'un nouvel enregistrement (fiche) du répertoire courant en plus du champ de l'enregistrement à renseigner, une présentation du message court SMS reçu et enregistré en mémoire, ce message étant celui montré en figure 2. Par ailleurs, dans ce premier écran de saisie, le processeur est programmé pour permettre d'identifier, à l'aide d'un déplacement du curseur 11 par la touche de navigation 4 et de la touche contextuelle 5A en relation avec le pictogramme 12, le début d'une chaîne de caractères à saisir comme données du champ de l'enregistrement. Le curseur 11 est ensuite déplacé jusqu'à la fin de la chaîne de caractères à saisir à l'aide de la touche de navigation 4, la chaîne sélectionnée apparaissant par exemple en vidéo inverse. Ensuite, par appui de la touche contextuelle 5 en relation avec le pictogramme 13, cette chaîne de caractères est traitée comme données du champ courant de l'enregistrement, cet enregistrement étant enregistré normalement dans une zone mémoire différente de celle où est enregistrée la succession de caractères constituant le message court SMS. Suite à quoi, le processeur passe à un écran de confirmation de saisie de champ pour l'enregistrement courant montré sur la figure 5. Ici, à titre d'exemple, l'écran de saisie montré sur la figure 4 permet de saisir un numéro d'appel de l'abonné dont les coordonnées complètes sont présentes dans le message court SMS. Dans l'écran de la figure 5, l'appui de la touche contextuelle 5B en relation avec le pictogramme 15 fait revenir la procédure de saisie à l'écran de la figure 4 tandis que l'appui de la touche contextuelle 5c en relation avec le pictogramme 16 provoque un nouvel affichage écran de saisie d'un autre champ d'une fiche de répertoire illustré figure 6, ici le champ correspondant à l'adresse de l'abonné suivi d'un écran de confirmation de saisie illustré figure 7. Dans cet écran on retrouve la présentation du message court SMS avec les pictogrammes des touches contextuelles indiqués ci-dessus.

On notera que cette procédure de saisie selon l'invention n'exclut pas une saisie manuelle des données à l'aide des touches 3 du clavier.

A la fin de la saisie des différents champ d'une fiche de répertoire sur la base des informations contenues dans un message court SMS, le processeur poursuit cette procédure de saisie par l'affichage de l'écran illustré à la figure 3 dans lequel la fiche de répertoire qui a été saisie est présentée comme l'enregistrement courant du répertoire courant.

En revenant maintenant à la figure 4, quand la succession de caractères alphanumériques constituant le message court SMS contient des symboles de séparation de chaînes de caractères, ici les symboles 20, le processeur peut avantageusement être programmé pour que l'appui de la touche contextuelle 5A déplace le curseur 11 au début de chaque chaîne de caractères encadrée par le symbole 20 et l'appui de la touche contextuelle 5B provoque la saisie immédiate de la chaîne de caractères dont le début est identifiée par le curseur comme données d'un champ d'une fiche de répertoire. Le processeur peut être programmé avantageusement pour que des appuis successifs de la touche 5A provoque le déplacement circulaire du curseur successivement au début des différentes chaînes de caractères. Ce perfectionnement évite par conséquent l'utilisation de la touche de navigation ce qui simplifie la procédure de saisie. Si la succession de caractères alphanumériques constituant le message court SMS est déjà structurée à l'aide des symboles de séparation de chaînes de caractères à l'image de la structure d'une fiche du répertoire ou encore, à l'aide d'identificateurs de champ d'enregistrement à la place des symboles de séparation de chaînes de caractères, il peut être avantageux de programmer le processeur pour un traitement automatique de l'ensemble des champs de cette fiche par un seul appui touche, par exemple par l'appui de la touche contextuelle 5C.

Il est entendu que ce principe du transfert des caractères d'un message SMS, reçus et enregistrés dans une première mémoire d'un appareil de radio communication, vers un répertoire de numéros de téléphone et/ou d'adresses enregistré dans une seconde mémoire de cet appareil de radio communication en vue d'une utilisation ultérieure, peut s'appliquer pour constituer des enregistrements d'un agenda ou autre forme de bases de données. On notera que s'agissant d'un radio téléphone cellulaire, la première mémoire est généralement intégrée au boîtier du radio téléphone tandis que la seconde mémoire est intégrée à la carte amovible venant s'insérer dans le boîtier du radio téléphone ce qui permet à l'usager de conserver le répertoire ou l'agenda ainsi constitué quand bien même il changerait de boîtier de radio téléphone.

## Revendications

1. Un appareil de radio communication comprenant un écran d'affichage (2), un clavier avec des touches (3,4,5A,5B,5C), une première mémoire prévue pour enregistrer temporairement une succession de caractères (SM) reçus par radio communication et un processeur programmé pour fonctionner avec les touches du clavier, la première mémoire et l'écran d'affichage afin d'afficher à l'écran ladite succession de caractères reçue par radio communication, **caractérisé en ce que** le processeur est en outre programmé pour passer, par au moins un appui touche, d'un affichage écran de la succession de caractères enregistrée dans ladite première mémoire vers un affichage écran de saisie de données sous forme structurée à enregistrer dans une seconde mémoire avec une présentation, dans cet écran de saisie de données, de ladite succession de caractères enregistrée dans ladite première mémoire afin de traiter au moins une partie de cette succession de caractères comme données à enregistrer sous forme structurée dans ladite seconde mémoire, la succession de caractères incluant au moins une chaîne de caractères encadrée par un symbole (20) de séparation de chaînes de caractères reconnu par le processeur pour le traitement de cette chaîne de caractères encadrée par le symbole (20) de séparation.

2. L'appareil selon la revendication 1, **caractérisé en ce que** les touches incluent une touche contextuelle (5A) dont l'appui déplace un curseur sur l'écran d'affichage au début de ladite chaîne de caractères et une autre touche contextuelle (5B) dont l'appui provoque la saisie de cette chaîne de caractères comme données à enregistrer sous forme structurée dans ladite seconde mémoire.

3. L'appareil selon la revendication 2, dans lequel le symbole de séparation de chaînes de caractères est un identificateur de champ d'enregistrement.

4. L'appareil selon l'une des revendications 1 ou 3, dans lequel la succession de caractères est un message SMS.

5. L'appareil selon l'une des revendications 1 à 4, dans lequel les données à enregistrer sous forme structurée dans la seconde mémoire sont des données d'un répertoire téléphonique et/ou d'adresses ou des données d'un agenda.

6. Un procédé de traitement de données dans un appareil de radio communication comprenant un écran d'affichage (2), un clavier avec des touches (3,4,5A,5B,5C), une première mémoire et un processeur programmé pour fonctionner avec les touches du clavier, la première mémoire et l'écran d'affichage, le procédé consistant dans les étapes suivantes:
commander le processeur pour enregistrer temporairement dans ladite première mémoire une succession de caractères (SM) reçus par radio communication et afficher à l'écran ladite succession de caractères ;
commander le processeur pour passer, en réponse à au moins un appui touche, à un affichage écran de saisie de données sous forme structurée à enregistrer dans une seconde mémoire avec présentation dans cet écran de saisie de données, de ladite succession de caractères enregistrés dans ladite première mémoire ; la succession de caractères incluant au moins une chaîne de caractères encadrée par un symbole (20) de séparation de chaînes de caractères reconnu par le processeur pour le traitement de cette chaîne de caractères encadrée par le symbole (20) de séparation,
commander le processeur pour traiter ladite au moins une chaîne de caractères encadrée par un symbole (20) de séparation de chaînes de caractères comme données à enregistrer sous forme structurée dans ladite seconde mémoire.

## Claims

1. A radio communication device, comprising a display screen (2), a keypad including keys (3, 4, 5A, 5B, 5C), a first memory provided for temporarily recording a sequence of characters (SM) received via radio communication, and a processor programmed for operating together with the keypad keys, the first memory, and the display screen so as to display on the screen said sequence of characters received via radio communication, **characterized in that** the processor is further programmed to be switched, by at least one keystroke, from a screen display of the sequence of characters recorded in said first memory to a screen display for entering data in organized form to be recorded in a second memory while showing on this data input screen said sequence of characters recorded in said first memory in order to process at least part of this sequence of characters as data to be recorded in organized form in said second memory, the sequence of characters comprising at least one character string framed by a character string separating symbol (20) recognized by the processor for processing this character string framed by the separating symbol (20).

2. The device according to claim 1, **characterized in that** the keys comprise a context sensitive key (5A), which when pressed moves a cursor on the display screen to the beginning of the character string, and another context sensitive key (5B), which when pressed causes the input of this character string as data to be recorded in organized form in said second memory.

3. The device according to claim 2, wherein the character string separating symbol is a record field identifier.

4. The device according to any of claims 1 or 3, wherein the sequence of characters is an SMS message.

5. The device according to any of claims 1 to 4, wherein the data to be recorded in organized form in the second memory is data of a telephone directory and/or address book or data of an organizer.

6. A data processing method in a radio communication device, comprising a display screen (2), a keypad including keys (3, 4, 5A, 5B, 5C), a first memory, and a processor programmed to operate together with the keypad keys, the first memory, and the display screen, the method comprising:
controlling the processor to temporarily record in said first memory a sequence of characters (SM) received via radio communication, and display on the screen said sequence of characters;
controlling the processor to switch, following at least one keystroke, to a screen display for entering data in organized form to be recorded in a second memory while showing on this data input screen said sequence of characters recorded in said first memory; the sequence of characters comprising at least one character string framed by a character string separating symbol (20) recognized by the processor for processing this character string framed by the separating symbol (20);
controlling the processor for processing said at least one character string framed by a character string separating symbol (20) as data to be recorded in organized form in said second memory.

## Patentansprüche

1. Funkkommunikationsgerät, umfassend einen Anzeigebildschirm (2), eine Tastatur mit Tasten (3, 4, 5A, 5B, 5C), einen ersten Speicher, der vorgesehen ist, um temporär eine Folge von Zeichen (SM) zu speichern, die durch Funkkommunikation empfangen wurden, und einen Prozessor, der programmiert ist, um mit den Tasten der Tastatur, dem ersten Speicher und dem Anzeigebildschirm zu funktionieren, um im Anzeigebildschirm die Folge von Zeichen anzuzeigen, die durch Funkkommunikation empfangen wurde,
**dadurch gekennzeichnet, dass** der Prozessor außerdem programmiert ist, um durch zumindest einen Tastendruck von einer Bildschirmanzeige der Zeichenfolge, die in dem ersten Speicher gespeichert ist, in eine Bildschirmanzeige zur Erfassung von Daten in strukturierter Form umzuschalten, die in einem zweiten Speicher mit einer Darstellung der Zeichenfolge in diesem Datenerfassungsbildschirm zu speichern sind, die in dem ersten Speicher gespeichert ist, um zumindest einen Teil dieser Zeichenfolge als Daten zu verarbeiten, die in strukturierter Form in dem zweiten Speicher zu speichern sind, wobei die Zeichenfolge zumindest eine Zeichenfolge einschließt, die durch ein Symbol (20) zur Trennung von Zeichenfolgen eingerahmt ist, das durch den Prozessor zur Verarbeitung dieser Zeichenfolge erkannt wird, die durch das Trennungssymbol (20) eingerahmt ist.

2. Gerät nach Anspruch 1,
**dadurch gekennzeichnet, dass** die Tasten eine kontextbezogene Taste (5A), deren Drücken einen Cursor auf dem Anzeigebildschirm an den Anfang der Zeichenfolge verschiebt, und eine weitere kontextbezogene Taste (5B) einschließen, deren Drücken die Erfassung dieser Zeichenfolge als Daten bewirkt, die in strukturierter Form in dem zweiten Speicher zu speichern sind.

3. Gerät nach Anspruch 2,
in dem das Symbol zur Trennung von Zeichenfolgen ein Kennzeichen für ein Aufzeichnungsfeld ist.

4. Gerät nach Anspruch 1 oder 3,
in dem die Zeichenfolge eine SMS-Nachricht ist.

5. Gerät nach einem der Ansprüche 1 bis 4,
in dem die Daten, die in strukturierter Form in dem zweiten Speicher zu speichern sind, Daten eines Telefonverzeichnisses und/oder Adressverzeichnisses oder Daten eines Terminkalenders sind.

6. Verfahren zur Datenverarbeitung in einem Funkkommunikationsgerät, umfassend einen Anzeigebildschirm (2), eine Tastatur mit Tasten (3, 4, 5A, 5B, 5C), einen ersten Speicher und einen Prozessor, der programmiert ist, um mit den Tasten der Tastatur, dem ersten Speicher und dem Anzeigebildschirm zu funktionieren, wobei das Verfahren folgende Schritte aufweist:
Steuern des Prozessors, um temporär in dem ersten Speicher eine Folge von Zeichen (SM) zu speichern, die durch Funkkommunikation empfangen wurden, und auf dem Bildschirm die Zeichenfolge anzuzeigen;
Steuern des Prozessors, um als Antwort auf zumindest einen Tastendruck in eine Bildschirmanzeige zur Erfassung von Daten in strukturierter Form umzuschalten, die in einem zweiten Speicher mit Darstellung der Folge von Zeichen in diesem Datenerfassungsbildschirm zu speichern sind, die in dem ersten Speicher gespeichert sind, wobei die Zeichenfolge zumindest eine Zeichenfolge einschließt, die durch ein Symbol (20) zur Trennung von Zeichenfolgen eingerahmt ist, das durch den Prozessor zur Verarbeitung dieser Zeichenfolge erkannt wird, die durch das Trennungssymbol (20) eingerahmt ist;
Steuern des Prozessors, um zumindest eine Zeichenfolge, die durch ein Symbol (20) zur Trennung von Zeichenfolgen eingerahmt ist, als Daten zu verarbeiten, die in strukturierter Form in dem zweiten Speicher zu speichern sind.
